(19) Europäisches Patentamt
European Patent Office
Office européen des brevets

(11) **EP 0 740 405 A1**

(12) **EUROPEAN PATENT APPLICATION**

(43) Date of publication:
**30.10.1996 Bulletin 1996/44**

(51) Int. Cl.$^6$: **H02K 21/14**, H02K 1/27, H02K 19/10

(21) Application number: **96106115.7**

(22) Date of filing: **18.04.1996**

(84) Designated Contracting States:
**DE FR GB**

(30) Priority: **28.04.1995 JP 129392/95**

(71) Applicant: **TOYOTA JIDOSHA KABUSHIKI KAISHA**
**Aichi-ken 471 (JP)**

(72) Inventors:
• **Kawabata, Yasutomo**
**Toyota-shi, Aichi-ken, 471 (JP)**

• **Yamada, Eiji**
**Toyota-shi, Aichi-ken, 471 (JP)**
• **Miura, Tetsuya**
**Toyota-shi, Aichi-ken, 471 (JP)**

(74) Representative: **Tiedtke, Harro, Dipl.-Ing.**
**Patentanwaltsbüro**
**Tiedtke-Bühling-Kinne & Partner**
**Bavariaring 4**
**80336 München (DE)**

(54) **Magnetic circuit for electric motor**

(57) The present invention further improves outputs per volume in synchronous electric motors, which have the improved efficiency close to the theoretical limit, by increasing a number of magnetic fluxes contributing to rotation of a rotor among total magnetic fluxes generated. In a smallest basic unit of three-phase coils and permanent magnets of a synchronous electric motor, there is a difference of ±1 between a number P of the three-phase coils and a number N of the permanent magnets. Each of the permanent magnets arranged on a circumference of a rotor has a length ML in a rotational direction, which is determined according to a specified equation including as variables a pitch of teeth 'Cp' and a width 'a' of each of 's' grooves arranged on the surface of each tooth. This structure significantly increases the number of magnetic fluxes contributing to rotation of the rotor among resultant magnetic fluxes generated by the permanent magnets and the three-phase coils.

Fig. 5

## Description

## BACKGROUND OF THE INVENTION

### Field of the Invention

The present invention relates to a technique of improving outputs of an electric motor.

### Description of the Related Art

An electric motor generally includes a stator (stationary coil) and a rotor (rotating coil), and rotates the rotor through the interaction between magnetic poles generated by permanent magnets or electromagnets and a revolving magnetic field produced by the control current fed to three-phase coils. Although the three-phase coils may be arranged on either the rotor or the stator, electric motors typically have three-phase coils on the stator and permanent magnets on the rotor to generate magnetic poles, because of the convenience of wiring. Such electric motors with permanent magnets occupy relatively small spaces but realize large output torques, and are thus preferably used as driving sources of electric vehicles and other apparatus.

A variety of techniques and methods have been proposed and developed to improve the output torques of these electric motors. For the enhanced output torques, salient poles are formed between adjacent permanent magnets to positively utilize reaction torques due to the reluctance of the salient poles. Another proposed method sets a predetermined difference between the number of coils on the stator and the number of pairs of permanent magnets on the rotor in order to realize a reduction mechanism (known as vernier motors).

In known structure of prior electric motors, the improved efficiency has already been close to the theoretical limit of the prior motor. Newly proposed techniques and methods of enhancing the output per volume in electric motors result in only a small improvement; for example, improving material, such as electromagnetic steel, or avoiding a temperature increase by heat. Varying the shape of permanent magnets or salient poles is still a matter of trial and error and does not significantly improve the output in electric motors.

## SUMMARY OF THE INVENTION

The object of the present invention is thus to enhance outputs of an electric motor, based on the mechanism of generating torques in the electric motor.

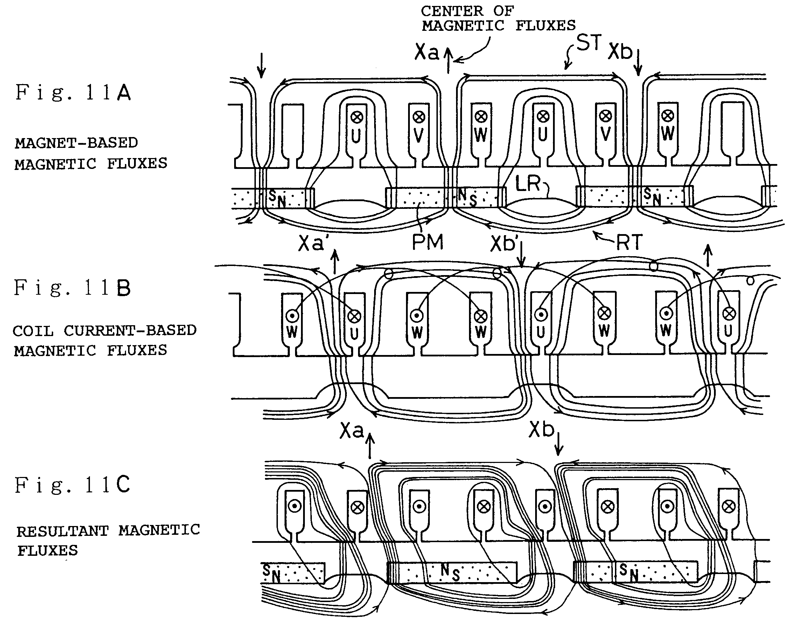

Principles of the present invention are described first according to the mechanism of producing rotating forces in an electric motor. Figs. 11A, 11B and 11C schematically show the state of magnetic fluxes in an electric motor with a rotor RT and a stator ST illustrated in a linear arrangement. In the illustrated electric motor, a plurality of permanent magnets PM magnetized in a diametrical direction of the rotor RT are applied on the surface of the rotor RT, and salient poles LR are formed between adjacent permanent magnets PM. Between the stator ST with three-phase (U,V,W) coils wound on slots and the rotor RT with each permanent magnet PM corresponding to each set of three-phase coils, there are magnetic fluxes generated by the permanent magnets as shown in Fig. 11A and magnetic fluxes by the current fed to the coils as shown in Fig. 11B. A composite of both the magnetic fluxes shown in Fig. 11C contributes to rotation of the electric motor. In the drawings of Figs. 11A through 11C, arrows 'xa' and 'xb' represent centers of magnetic fluxes.

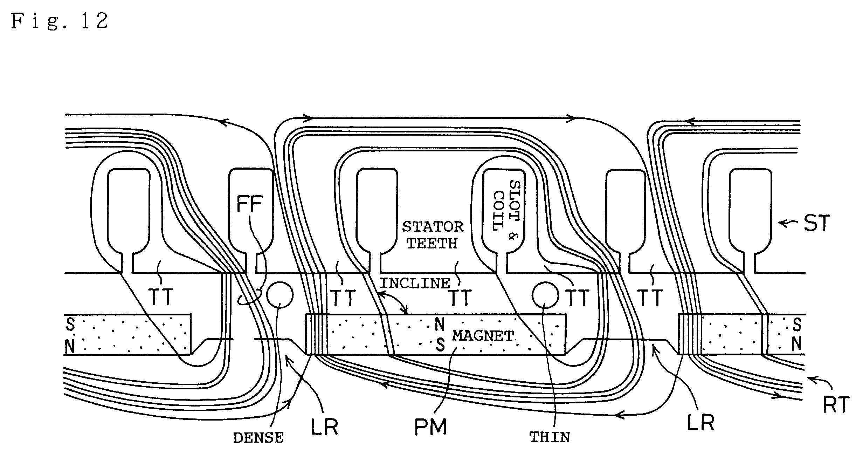

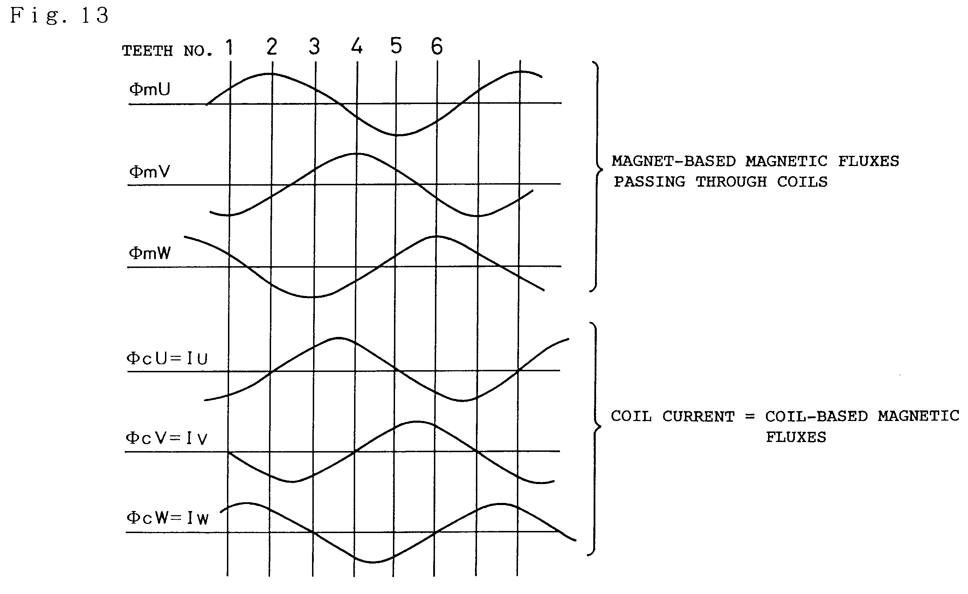

The state of magnetic fluxes in Fig. 11C is enlarged to the drawing of Fig. 12 for the purpose of clear understanding. As illustrated in Fig. 12, the resultant magnetic fluxes are affected by the shape and arrangement of teeth TT and salient poles LR and accordingly have the lack of symmetry. Significantly inclined magnetic paths are formed between a salient pole LR and a corresponding tooth TT opposed to the salient pole LR as expressed by FF in Fig. 12. The inclined magnetic paths existing in the gap between the tooth TT and the rotor RT generate a force of attracting the rotor RT so as to make the length of the magnetic paths shorter. This is the mechanism of generating a rotating force in electric motors. Fig. 13 shows the permanent magnet-based magnetic fluxes $\Phi mU$, $\Phi mV$, and $\Phi mW$ passing through U, V, and W coils and the coil current-based magnetic fluxes $\Phi cU$, $\Phi cV$, and $\Phi cW$ in a case that six teeth TT exist with respect to each pair of permanent magnets PM.

An increase in number of inclined magnetic fluxes or a greater inclination of magnetic fluxes effectively improves the rotating force in electric motors. The former is attained by enhancing the electric field contributing to generation of inclined magnetic fluxes or by increasing the number of magnetic fluxes contributing to the rotating force among the total magnetic fluxes generated.

The present invention is directed to an electric motor, wherein a predetermined difference is set between a number of three-phase coils on a stator and a number of corresponding permanent magnets on a rotor, in order to enhance the ratio of magnetic fluxes inclined in a rotational direction of a rotor to composite magnetic fluxes. For example, one pair or two pairs of (that is, two or four) permanent magnets are arranged with respect to a set of three-phase coils U, V, and W. This structure allows at least one tooth on the stator to be deviated from the position directly opposed to a permanent magnet on the rotor, or alternatively allows at least one permanent magnet on the rotor to be deviated from the position directly opposed to a tooth on the stator.

In the electric motor of the present invention, a circumferential length ML of each permanent magnet is determined to satisfy the relation given by following equation (1):

$$ML = (a+C) + k(a+C)^2 \qquad (1)$$
$$= Cp + k \cdot Cp^2$$

$$0.08 \leqq k \leqq 0.12$$

where 'C' represents a width of each tooth on the stator along the circumference of the rotor; 'a' denotes a distance between adjacent teeth; and 'Cp' denotes a pitch of the teeth and satisfies a relation Cp=a+C . This increases the number of inclined magnetic fluxes, that is, the number of composite magnetic fluxes contributing to rotation of each permanent magnet on the rotor, thus improving the output per volume in the electric motor.

The present invention is also directed to another electric motor, wherein 's' grooves of 'a' in width are arranged on the surface of each tooth, where 's' is positive integers; and the circumferential length ML of each permanent magnet is determined to satisfy the relation given by the following equation (2):

$$ML = m\{(C+a)/(s+1)\} + k\{(C+a)/(s+1)\}^2 \qquad (2)$$
$$= m\{Cp/(s+1)\} + k\{Cp/(s+1)\}^2$$

$$0.08 \leqq k \leqq 0.12$$

where 'm' is positive integers; and 'Cp' denotes a pitch of teeth and satisfies a relation Cp=a+C . This structure increases the number of composite magnetic fluxes contributing to rotation of each permanent magnet as well as the number of composite magnetic fluxes contributing to rotation of all the permanent magnet. Giving appropriate values to the integers 'm' and 's' determines possible combinations. Typical examples of such combinations will be given below as preferred embodiments.

In accordance with one preferable application, each groove formed on the surface of the teeth has a depth 'd', which is substantially equal to or double the width 'a' of the groove. Such grooves efficiently define the arrangement of magnetic fluxes passing through the teeth on the stator so as to attain a desired relation between magnetic fluxes. It is also preferable that the predetermined difference between the number of three-phase coils and the number of permanent magnets is set equal to ±1.

Other known electric motors include diametrically depressed portions formed on the circumference of the rotor in place of the permanent magnets, and use these depressed portions as reverse salient poles. The principle of the present invention is also applicable to such electric motors with reverse salient poles in the same manner as those with permanent magnets.

These and other objects, features, aspects, and advantages of the present invention will become more apparent from the following detailed description of the preferred embodiments with the accompanying drawings.

## BRIEF DESCRIPTION OF THE DRAWINGS

Fig. 1 is a plan view illustrating structure of a synchronous three-phase motor 40 embodying the present invention;

Fig. 2 is a cross sectional view illustrating the synchronous three-phase motor 40 with a rotor 50 in the embodiment;

Fig. 3 is a block diagram showing a motor driver 80 and a controller 90 used for driving the synchronous three-phase motor 40;

Fig. 4 is a graph showing current flowing through three-phase coils;

Fig. 5 shows another embodiment, wherein two permanent magnets are arranged with respect to the basic unit of three-phase coils and each tooth 122 through 124 has one groove on the surface thereof;

Fig. 6 shows still another embodiment, wherein four permanent magnets are arranged with respect to the basic unit of three-phase coils and each tooth 222 through 224 has three grooves on the surface thereof;

Figs. 7A and 7B show resultant magnetic fluxes generated in the synchronous three-phase motor having the structure of Fig. 6 under two different conditions;

Fig. 8 shows a table of combinations of coils, magnets, and teeth defined by general formulae;

Fig. 9 schematically illustrates examples of possible combinations;

Fig. 10 shows magnetic fluxes in an electric motor with salient poles;

Figs. 11A through 11C show a process of generating magnetic fluxes contributing to rotation in an electric motor;

Fig. 12 is an enlarged view illustrating the resultant magnetic fluxes of Fig. 11C; and

Fig. 13 is a graph showing permanent magnet-based magnetic fluxes and coil current-based magnetic fluxes in the respective teeth.

## DESCRIPTION OF THE PREFERRED EMBODIMENTS

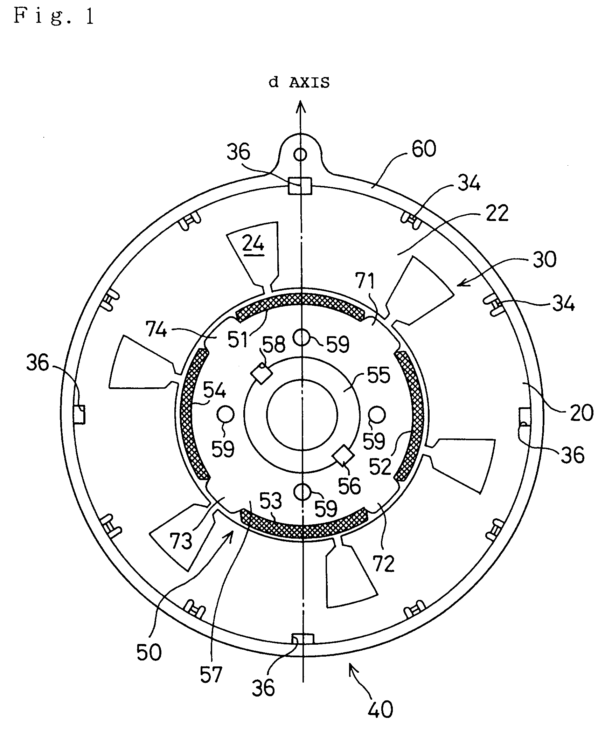

Fig. 1 is a plan view illustrating structure of a synchronous three-phase motor 40 embodying the present invention. The synchronous three-phase motor 40 includes a rotor (rotating coil) 50 and a stator (stationary coil) 30 with a total of six teeth 22 arranged at equal intervals around a rotating shaft 55. This means that the synchronous three-phase motor 40 includes two basic units, each basic unit consisting of three coils of U, V, and W phases and two permanent magnets. In this embodiment, a number of coils P included in each basic unit, for which the relationship between the number of three-phase coils and the number of permanent magnets is defined, is equal to 3. Four permanent magnets 51 through 54 are applied on the circumference of the rotor 50. A number of magnets N included in each basic unit with three coils is accordingly equal to 2, and this satisfies a relation of N=P-1 .

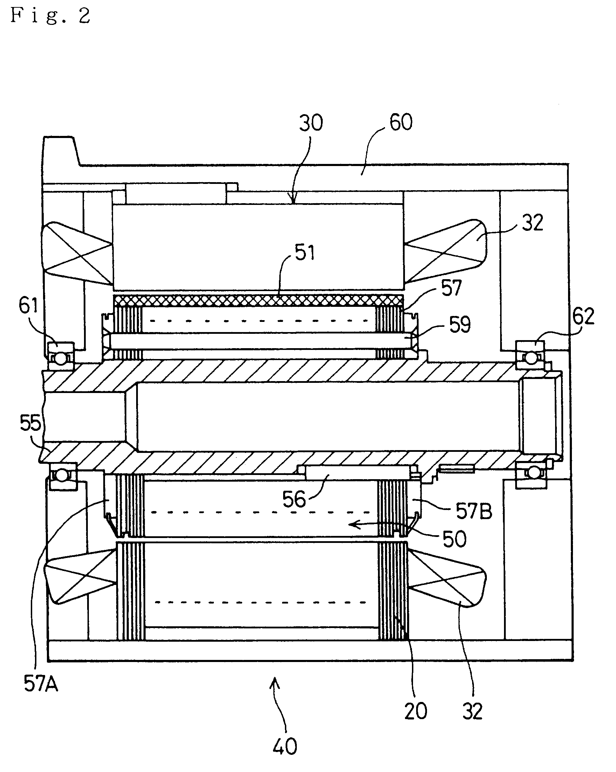

Fig. 2 shows general structure of the synchronous three-phase motor 40, which includes the stator 30, the rotor 50, and a casing 60 for accommodating the stator 30 and the rotor 50. While the permanent magnets 51 through 54 are applied on the circumference of the rotor 50, the hollow rotating shaft 55 disposed on the substantial center of the rotor 50 is rotatably supported by bearings 61 and 62 attached to the casing 60.

The rotor 50 includes a plurality of rotor elements 57 punched from a thin plate of non-directional electromagnetic steel and laid one upon another as shown in Fig. 2. Each rotor element 57 has four salient poles 71 through 74 arranged at 90-degree intervals as shown in Fig. 1. The salient poles 71 through 74 may be formed integrally with the rotor element 57 or otherwise formed separately and afterwards attached to the rotor element 57. Each rotor element 57 is further provided with four through holes, into which assembling pins 59 are inserted and fitted. After the plurality of rotor elements 57 are positioned by the pins 59 and laid one upon another, end plates 57A and 57B are arranged before and after the laminate of rotor elements 57. The respective ends of the pins 59 are caulked or welded to the end plates 57A and 57B, so that the laminate of rotor elements 57 is fixed. The laminate of rotor elements 57 forms a hollow center for receiving the rotating shaft 55 pressed therein. The rotor elements 57 also have key grooves 58 for the purpose of fixture. The rotating shaft 55 with keys 56 received by key grooves formed in the rotating shaft 55 is inserted into the hollow center defined by the laminate of rotor elements 57. This completes assembly of the rotor 50.

After the assembly of the rotor 50, the four permanent magnets 51 through 54 of a predetermined thickness are applied along the axis of the rotor 50 on the circumference of the rotor 50. The permanent magnets 51 through 54 are magnetized in the direction of thickness. When the rotor 50 is coupled with the stator 30, a magnetic path Mg is formed to pass through the adjacent permanent magnets, the rotor elements 57, and stator elements 20 (see Fig. 1).

Like the rotor elements 57, the stator elements 20 constituting the stator 30 are punched from a thin plate of non-directional electromagnetic steel. Each stator element 20 includes a total of six teeth 22 as shown in Fig. 1. Each stator element 20 has, on its circumference, eight notches 34 used for welding and four key grooves 36 for receiving fixture keys. The stator 30 is assembled by positioning a laminate of plate-like stator elements 20 with a jig and welding the notches 34 formed on the circumference of the respective stator elements 20. Three-phase coils 32 (U, V, and W phases) for generating a revolving magnetic field in the stator 30 are wound on slots 24 formed between adjacent teeth 22.

The stator 30 thus assembled is coupled with the casing 60 by inserting fixture keys into key grooves formed on the inner surface of the casing 60 and the corresponding key grooves 36 formed on the circumference of the stator 30. The rotor 50 is then linked with the assembly of the stator 30 and the casing 60 to be rotatably supported by the bearings 61 and 62 of the casing 60. This completes the synchronous three-phase motor 40.

When exciting current is fed to the three-phase coils 32 on the stator 30 to generate a revolving magnetic field, a magnetic path Mq is formed to pass through the adjacent salient poles, the rotor elements 57, and the stator elements 20. In the description, an axis of the permanent magnet-based magnetic flux diametrically passing through the rotor 50 is referred to as 'd' axis, whereas that of the coil-based magnetic flux diametrically passing through the rotor 50 is referred to as 'q' axis. Characteristics of the composite of magnetic fluxes produced by the permanent magnets 51 through 54 and those by the three-phase coils 32 on the stator 30 will be described later.

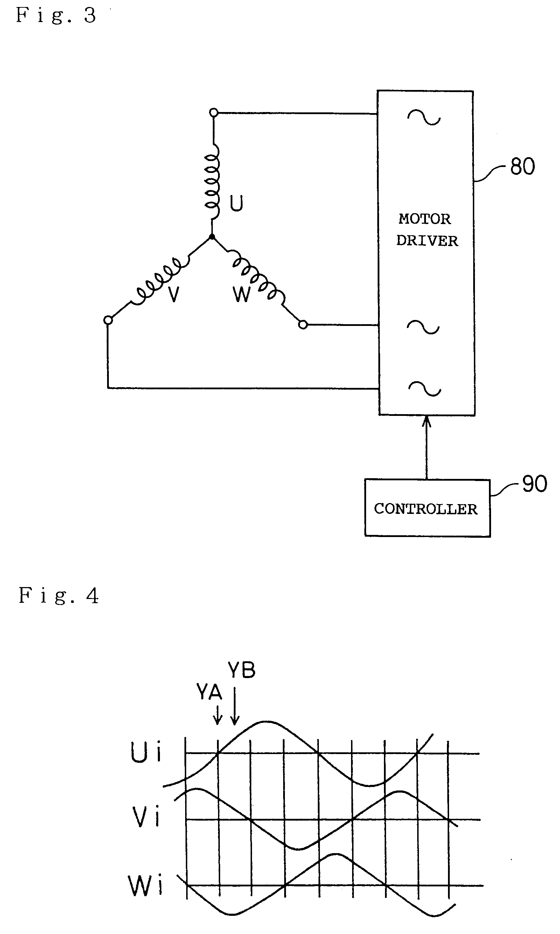

The three coils of U, V, and W phases in the synchronous three-phase motor 40 are connected to a motor driver 80 controlled by a controller 90 as shown in Fig. 3. The motor driver 80 applies a.c. voltages of a predetermined frequency with phase differences of 120 degrees onto the respective phases. The rotor 50 of the synchronous three-phase motor 40 accordingly rotates at the rotating speed corresponding to the predetermined frequency. The graph of Fig. 4 shows voltages applied onto the three phases.

In this embodiment, a length ML of each permanent magnet 51 (52,53,54) in the rotational direction is expressed by the following equation (3):

$$ML = (a+C) + k(a+C)^2 \qquad (3)$$
$$= Cp + k \cdot Cp^2$$

$$0.08 \leq k \leq 0.12$$

where 'C' represents a width of each tooth 22; 'a' denotes a distance between adjacent teeth 22; and 'Cp' denotes a pitch of the teeth and satisfies a relation Cp=a+C .

In this embodiment, two permanent magnets correspond to the smallest basic unit of three-phase coils (1 set= 3 coils). Irrespective of the rotational angle of the rotor 50 relative to the stator 30, at least one tooth 22 is deviated from the position directly opposed to a permanent magnet on the rotor 50. This allows a composite of permanent magnet-based magnetic fluxes and coil-based magnetic fluxes to be inclined at one of the salient poles 71 through 74. When the length ML of each permanent magnet in the rotational direction is defined by Equation (3) given above and the current flowing through the U, V, and W phases has phase differences shown in Fig. 4, the number of inclined magnetic fluxes reaches its maximum.

This principle is applied to other embodiments for generalization, on the assumption that the number of three-phase coils P included in a basic unit satisfies the relation of either $P=N+1$ or $P=N-1$. The length ML of each permanent magnet in the rotational direction is not restricted to one value but may be selected among possible alternatives using a variable 'm' ('m' is a positive integer). Each tooth may have 's' ('s' is one or more integer) grooves on the surface thereof facing to the rotor. The presence of grooves allows the composite magnetic fluxes to keep away from the grooves while approaching the teeth. Like the structure with a number of teeth, this structure with grooves also increases the number of inclined magnetic fluxes.

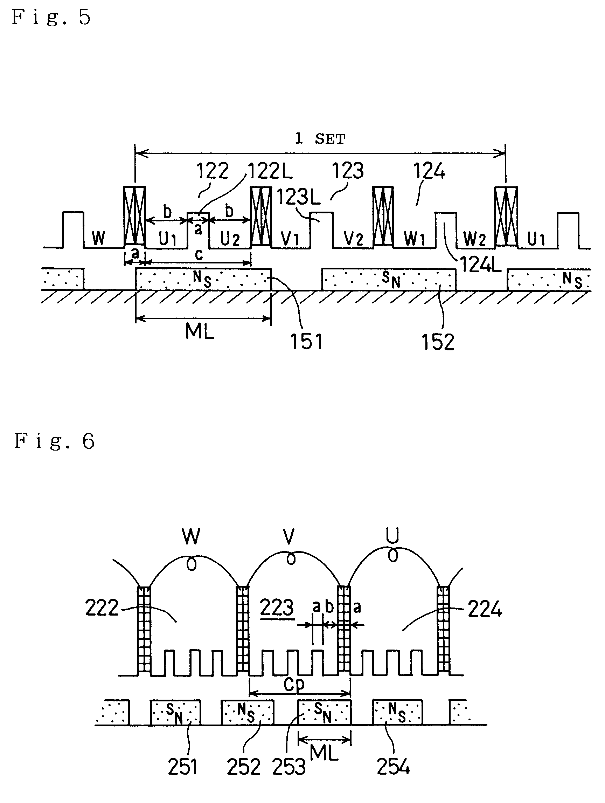

Fig. 5 shows another embodiment with the number of grooves $s=1$ and the variable $m=2$, wherein three teeth 122, 123, and 124 corresponding to three coils of U, V, and W phases constitute a basic unit (1 set). In this embodiment, two permanent magnets 151 and 152 correspond to the three coils ($N=P-1$), which are illustrated in a linear arrangement in Fig. 5. Each tooth 122 through 124 has a width 'C' and is apart from an adjacent tooth by a distance 'a'. The pitch Cp of the teeth 122, 123, and 124 is accordingly given by $Cp=a+C$.

The width of each groove 122L through 124L formed on a substantial center of each tooth 122 through 124 is equal to the distance 'a' between adjacent teeth. The depth of the groove 122L is approximately 1.5 times the width 'a' of the groove 122L. The width C of the teeth 122, 123, and 124 and the pitch Cp of the teeth 122, 123, and 124 are expressed by:

$$C = b+a+b = (a+b)+b$$

$$Cp = C+a = b+a+b+a = 2(a+b)$$

where 'b' denotes a distance between a coil and each groove 122L through 124L or a width of each division substantially acting as a tooth.

A length ML of each permanent magnet 151 (152) is specified as the following equation (4):

$$ML = m\{(C+a)/(s+1)\} + k\{(C+a)/(s+1)\}^2 \qquad (4)$$
$$= m\{Cp/(s+1)\} + k\{Cp/(s+1)\}^2$$

$$0.08 \leqq k \leqq 0.12$$

where 'm' and 's' are positive integers; and 'Cp' denotes the pitch of teeth and satisfies a relation $Cp=a+C$.

When $s=1$ (representing one groove) and the variable $m=2$ are substituted into Equation (4) given above, this gives:

$$ML = Cp + k\,Cp^2/4$$

Although not illustrated, the length ML of each permanent magnet may be determined under the condition of $m=1$. In this case, the length of each permanent magnet is approximately 1/2 the above length ML.

When the distance 'a' between adjacent teeth or the width 'a' of 's' grooves, the width C of each tooth, the pitch Cp of teeth, and the length ML of each permanent magnet in the rotational direction satisfy the above relationship, the number of inclined composite magnetic fluxes contributing to rotation of the rotor 50 reaches its maximum.

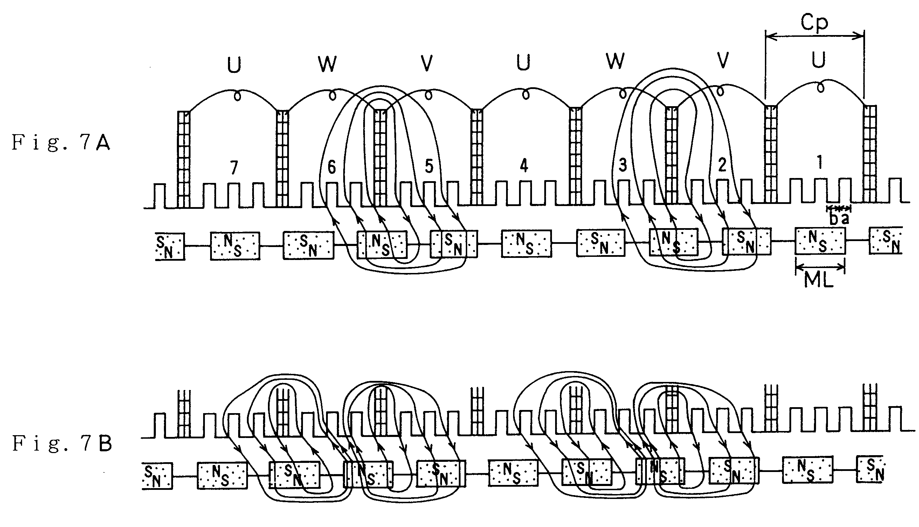

Fig. 6 shows still another embodiment with the number of grooves $s=3$ and the variable $m=2$, wherein three teeth 222, 223, and 224 constituting a smallest basic unit of three-phase coils correspond to four permanent magnets 251 through 254 ($N=P+1$).

Figs. 7A and 7B show resultant magnetic fluxes generated in the synchronous three-phase motor having the structure of Fig. 6 under two different conditions. Fig. 7A shows the resultant magnetic fluxes at the point YA in the graph of Fig. 4, that is, when the coil current in any one phase (the phase U in this example) is zero. Fig. 7B shows the resultant magnetic fluxes at the point YB in the graph of Fig. 4, that is, when the coil current in any one phase (the phase W in this example) is a peak value. Currents flowing through the U, V, and W phases are similar with phase differences of 120 degrees. The resultant magnetic fluxes repeat the state shown in either Fig. 7A or Fig. 7B at every 60 degrees.

In both the cases of Fig. 7A and 7B, the number of inclined magnetic fluxes remarkably increases, so that the resultant magnetic fluxes efficiently contribute to rotation of the rotor 50. Compared with the conventional synchronous motors, the synchronous three-phase motor of the above embodiment with permanent magnets having the length ML in the rotational direction defined by Equation (3) given above and the synchronous three-phase motor of another embodiment with 's' grooves on the surface of teeth and permanent magnets having the length ML in the rotational direction defined by Equation (4) give above have significantly improved outputs per volume.

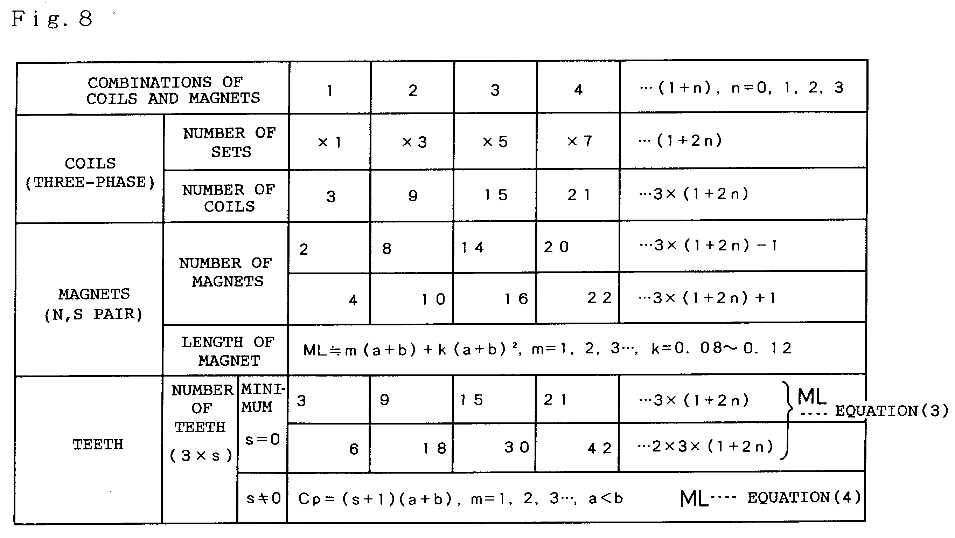

Fig. 8 shows combinations of coils, magnets, and teeth defined by general formulae. Each combination shown in Fig. 8 represents a smallest basic unit of three-phase coils and permanent magnets, which may be repeated arbitrary times in 360 degrees. The number P of three-phase coils is defined by $P=3\times(1+2n)$, where 'n' is equal to zero or a positive integer, and satisfies the relation of either $N=P-1$ or $N=P+1$, where N denotes the number of permanent magnets corresponding to the three-phase coils. When no grooves are formed on the teeth ($s=0$), the required number of teeth is given by:

$$T=P \text{ when } N=P-1; \text{ and}$$

$$T=P\times2 \text{ when } N=P+1.$$

When 'C' represents the width of each tooth, 'a' the distance between adjacent teeth and the width of each groove (when exists), and 'b' the distance between adjacent grooves (when exist) or the width of each division substantially acting as a tooth, the pitch Cp of teeth is given as:

$$Cp = a+C \text{ with no grooves; and}$$

$$Cp = a+C = (s+1) \times (a+b) \text{ with 's' grooves.}$$

The length ML of each permanent magnet is defined by Equation (4) given above. When s=0, Equation (4) becomes identical with Equation (3) with no grooves.

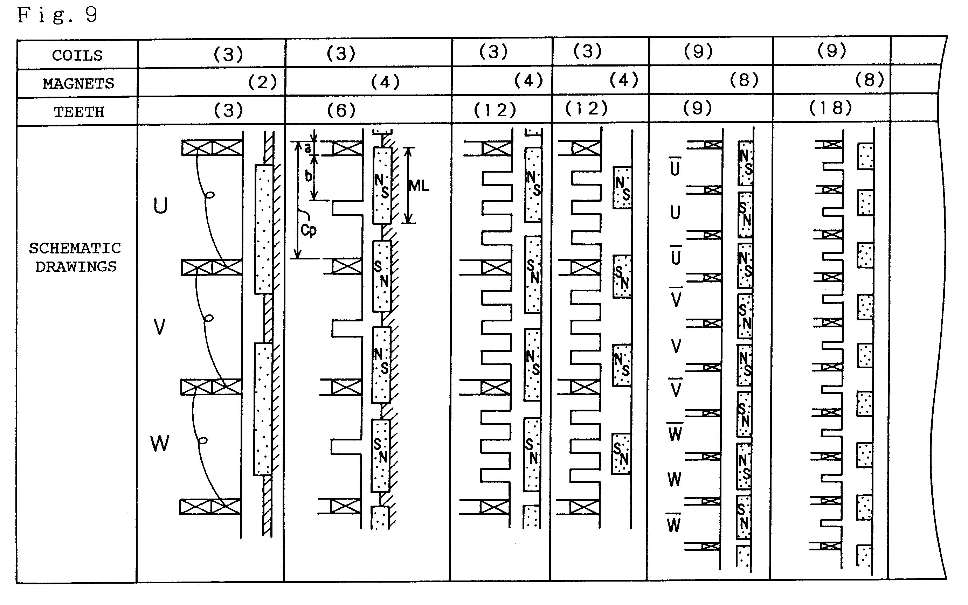

Fig. 9 shows examples of possible combinations. In those cases with grooves, all the divisions defined by the grooves are counted as teeth.

As described above, the synchronous three-phase motors of the present invention specified by the general formulae of Fig. 8 have the significantly increasing number of inclined magnetic fluxes contributing to rotation of the rotor 50, thereby remarkably improving the output per volume, compared with conventional synchronous three-phase motors.

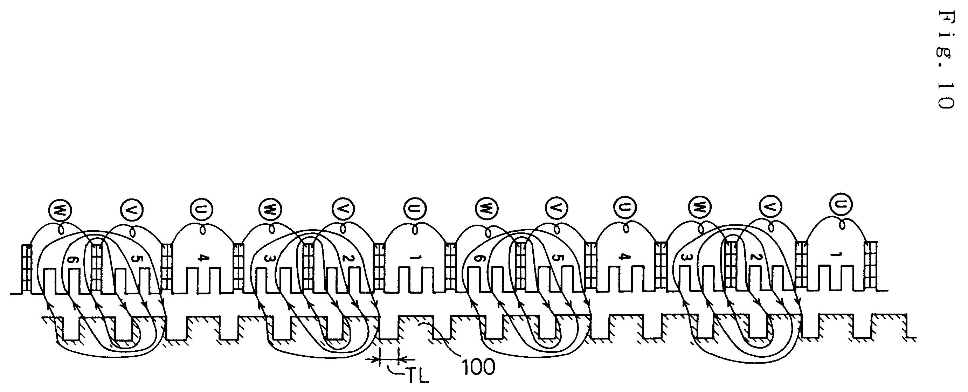

The second embodiment of this invention is described as follows. As shown in Fig. 10, the principle of the present invention may be applicable to electric motors including salient poles 100 of a magnetic substance in place of permanent magnets. In the second embodiment, a distance TL between adjacent salient poles 100 in the rotational direction, that is, a width of each reverse salient pole, is determined as ML in Equations (3) and (4) given above.

There may be many other modifications, alternations, and changes without departing from the scope or spirit of essential characteristics of the invention. It is thus clearly understood that the above embodiments are only illustrative and not restrictive in any sense. The scope and spirit of the present invention are limited only by the terms of the appended claims.

The present invention further improves outputs per volume in synchronous electric motors, which have the improved efficiency close to the theoretical limit, by increasing a number of magnetic fluxes contributing to rotation of a rotor among total magnetic fluxes generated. In a smallest basic unit of three-phase coils and permanent magnets of a synchronous electric motor, there is a difference of ±1 between a number P of the three-phase coils and a number N of the permanent magnets. Each of the permanent magnets arranged on a circumference of a rotor has a length ML in a rotational direction, which is determined according to a specified equation including as variables a pitch of teeth 'Cp' and a width 'a' of each of 's' grooves arranged on the surface of each tooth. This structure significantly increases the number of magnetic fluxes contributing to rotation of the rotor among resultant magnetic fluxes generated by the permanent magnets and the three-phase coils.

## Claims

1. An electric motor comprising: a rotor; a pair of permanent magnets applied on a circumference of said rotor, each said pair of permanent magnets being magnetized in a diametrical direction of said rotor and having magnetic poles of opposed directions; a stator; and a plurality of teeth arranged on said stator to have three-phase coils wound thereon,

   wherein a predetermined difference is set between a number of said three-phase coils and a number of said permanent magnets, a circumferential length ML of each said permanent magnet being expressed by:

   $$ML = (a+C) + k(a+C)^2$$
   $$= Cp + k \cdot Cp^2$$

   $$0.08 \leqq k \leqq 0.12$$
   where 'C' represents a width of each said tooth on said stator along the circumference of said rotor; 'a' denotes a distance between adjacent teeth; and 'Cp' denotes a pitch of said teeth and satisfies a relation Cp=a+C .

2. An electric motor comprising: a rotor; a pair of permanent magnets applied on a circumference of said rotor, each said pair of permanent magnets being magnetized in a diametrical direction of said rotor and having magnetic poles of opposed directions; a stator; and a plurality of teeth arranged on said stator to have three-phase coils wound thereon,

   wherein a predetermined difference is set between a number of said three-phase coils and a number of said permanent magnets, each of said teeth having a width 'C' along the circumference of said rotor and being arranged on said stator to be apart from an adjacent tooth by a distance 'a', said each tooth of 'C' in width further having 's' grooves arranged on a surface of said tooth facing to said rotor and along a rotational axis of said rotor, wherein 's' is positive integers; each said groove having a width substantially equal to the distance 'a' between adjacent teeth, a circumferential length ML of each said permanent magnet arranged on said rotor being expressed by:

   $$ML = m\{(C+a)/(s+1)\} + k\{(C+a)/(s+1)\}^2$$
   $$= m\{Cp/(s+1)\} + k\{Cp/(s+1)\}^2$$

$$0.08 \leqq k \leqq 0.12$$

where 'm' is positive integers; and 'Cp' denotes a pitch of said teeth and satisfies a relation Cp=a+C .

3. An electric motor in accordance with claim 2, wherein a depth 'd' of said each groovein is in a range between substantially equal to and double the width 'a' of said groove.

4. An electric motor in accordance with any one of claims 1 through 3, wherein said predetermined difference between the number of said three-phase coils and the number of said permanent magnets is set equal to 1.

5. An electric motor comprising: a rotor; a plurality of reverse salient poles arranged on a circumference of said rotor, each said reverse salient pole being depressed in a diametrical direction of said rotor; a stator; and a plurality of teeth arranged on said stator to have three-phase coils wound thereon,

wherein a predetermined difference is set between a number of said three-phase coils and a number of said reverse salient poles, a circumferential length ML of each said reverse salient pole being expressed by:

$$ML = (a+C) + k(a+C)^2$$
$$= Cp + k \cdot Cp^2$$

$$0.08 \leqq k \leqq 0.12$$

where 'C' represents a width of each said tooth on said stator along the circumference of said rotor; 'a' denotes a distance between adjacent teeth; and 'Cp' denotes a pitch of said teeth and satisfies a relation Cp=a+C .

6. An electric motor comprising: a rotor; a plurality of reverse salient poles arranged on a circumference of said rotor, each said reverse salient pole being depressed in a diametrical direction of said rotor; a stator; and a plurality of teeth arranged on said stator to have three-phase coils wound thereon,

wherein a predetermined difference is set between a number of said three-phase coils and a number of said reverse salient poles, each of said teeth having a width 'C' along the circumference of said rotor and being arranged on said stator to be apart from an adjacent tooth by a distance 'a', said each tooth of 'C' in width further having 's' grooves arranged on a surface of said tooth facing to said rotor and along a rotational axis of said rotor, where 's' is positive integers; each said groove having a width substantially equal to the distance 'a' between adjacent teeth, a circumferential length ML of each said reverse salient pole arranged on said rotor being expressed by:

$$ML = m\{(C+a)/(s+1)\} + k\{(C+a)/(s+1)\}^2$$
$$= m\{Cp/(s+1)\} + k\{Cp/(s+1)\}^2$$

$$0.08 \leqq k \leqq 0.12$$

where 'm' is positive integers; and 'Cp' denotes a pitch of said teeth and satisfies a relation Cp=a+C .

7. An electric motor in accordance with claim 6, wherein a depth 'd' of said each groovein is in a range between substantially equal to and double the width 'a' of said groove.

8. An electric motor in accordance with claims 6 or 7, wherein said predetermined difference between the number of said three-phase coils and the number of said reverse salient poles is set equal to 1.

Fig. 1

d AXIS

Fig. 2

Fig. 3

Fig. 4

Fig. 5

Fig. 6

Fig. 7A

Fig. 7B

# Fig. 8

EP 0 740 405 A1

| COMBINATIONS OF COILS AND MAGNETS | | | 1 | 2 | 3 | 4 | ⋯(1+n), n=0, 1, 2, 3 |
|---|---|---|---|---|---|---|---|
| COILS (THREE-PHASE) | NUMBER OF SETS | | ×1 | ×3 | ×5 | ×7 | ⋯(1+2n) |
| | NUMBER OF COILS | | 3 | 9 | 15 | 21 | ⋯3×(1+2n) |
| MAGNETS (N,S PAIR) | NUMBER OF MAGNETS | | 2 | 8 | 14 | 20 | ⋯3×(1+2n)−1 |
| | | | 4 | 10 | 16 | 22 | ⋯3×(1+2n)+1 |
| | LENGTH OF MAGNET | | $ML \fallingdotseq m(a+b)+k(a+b)^2$, m=1, 2, 3⋯, k=0.08〜0.12 | | | | |
| TEETH | NUMBER OF TEETH (3×s) | MINI-MUM s=0 | 3 | 9 | 15 | 21 | ⋯3×(1+2n) |
| | | | 6 | 18 | 30 | 42 | ⋯2×3×(1+2n) ⎬ ML ⋯⋯ EQUATION(3) |
| | | s≠0 | $Cp=(s+1)(a+b)$, m=1, 2, 3⋯, a<b  ML⋯⋯ EQUATION(4) | | | | |

Fig. 9

| | COILS | (3) | (3) | (3) | (3) | (9) | (9) | |
|---|---|---|---|---|---|---|---|---|
| | MAGNETS | (2) | (4) | (4) | (4) | (8) | (8) | |
| | TEETH | (3) | (6) | (12) | (12) | (9) | (18) | |
| SCHEMATIC DRAWINGS | | | | | | | | |

EP 0 740 405 A1

Fig. 10

Fig. 11A

MAGNET-BASED
MAGNETIC FLUXES

Fig. 11B

COIL CURRENT-BASED
MAGNETIC FLUXES

Fig. 11C

RESULTANT MAGNETIC
FLUXES

EP 0 740 405 A1

Fig. 12

STATOR TEETH, SLOT & COIL, INCLINE, MAGNET (N/S), THIN, DENSE, PM, LR, TT, RT, ST, FF

Fig. 13

TEETH NO. 1 2 3 4 5 6

$\Phi mU$

$\Phi mV$

$\Phi mW$

$\Phi cU = I_U$

$\Phi cV = I_V$

$\Phi cW = I_W$

MAGNET-BASED MAGNETIC FLUXES
PASSING THROUGH COILS

COIL CURRENT = COIL-BASED MAGNETIC
FLUXES

EP 0 740 405 A1

EP 0 740 405 A1

| | European Patent Office | EUROPEAN SEARCH REPORT | Application Number EP 96 10 6115 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | I.E.E.E.TRANSACTIONS ON MAGNETICS, vol. 24, no. 6, November 1988, N.Y.USA, pages 2901-2903, XP000004703 TOUZHU LI AND GORDON SLEMON: "Reduction of cogging torque in permanent magnet motors" * page 2902, column 2, paragraph 1; figures 1,2 * | 1 | H02K21/14 H02K1/27 H02K19/10 |
| A | WO-A-90 09698 (ZAHNRADFABRIK FRIEDRICHSHAFEN AG) 23 August 1990 * claims 1,6; figures 1,2 * | 1,4 | |
| A | PATENT ABSTRACTS OF JAPAN vol. 11, no. 280 (E-539) [2727] , 10 September 1987 & JP-A-62 077840 (TOSHIBA CORP.), 10 April 1987, * abstract * | 2 | |
| A | PATENT ABSTRACTS OF JAPAN vol. 9, no. 234 (E-344) [1957] , 20 September 1985 & JP-A-60 087639 (NIPPON DENSO K.K.), 17 May 1985, * abstract * | 3,7 | TECHNICAL FIELDS SEARCHED (Int.Cl.6) H02K |
| A | GB-A-2 167 910 (KOLLMORGEN TECHNOLOGIES CORP.) 4 June 1986 * page 11, line 16 - line 21; figures 6,11 * | 5,8 | |
| A | US-A-3 740 630 (J.JARRET & AL.) 19 June 1973 * figure 1 * | 6 | |

-/--

The present search report has been drawn up for all claims

| Place of search | Date of completion of the search | Examiner |
|---|---|---|
| BERLIN | 5 August 1996 | Leouffre, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

19

European Patent
Office

**EUROPEAN SEARCH REPORT**

Application Number

EP 96 10 6115

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 502 831 (INDUSTRIE MAGNETI MARELLI S.P.A.) 9 September 1992 * column 2, line 12 - line 18 * --- | 1 | |
| A | INTERNATIONAL MAGNETICS CONFERENCE , 13 - 16 April 1992, ST-LOUIS USA, XP002010106 TSUTOMU MIZUNO & AL.: "Magnetic circuit analysis of a linear synchronous motor with permanent magnets" * Table 1* --- | 1 | |
| A | EP-A-0 163 747 (FANUC LTD) 11 December 1985 * figure 3 * ----- | 1 | |
| | | | TECHNICAL FIELDS SEARCHED (Int.Cl.6) |

The present search report has been drawn up for all claims

| Place of search | Date of completion of the search | Examiner |
|---|---|---|
| BERLIN | 5 August 1996 | Leouffre, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)